# EUROPÄISCHE PATENTSCHRIFT

(11) **EP 3 329 168 B1**
(45) Veröffentlichungstag und Bekanntmachung des Hinweises auf die Patenterteilung: **28.04.2021**
(21) Anmeldenummer: 16733292.3
(22) Anmeldetag: 17.06.2016
(51) Int. Cl.: F16L 39/06, B23Q 11/10, F16L 41/03, F16K 27/00, F15B 13/00

(54) **VERTEILVORRICHTUNG**
DISTRIBUTION DEVICE
DISPOSITIF DE DISTRIBUTION

(30) Priorität: 29.07.2015 DE 102015009902
(43) Veröffentlichungstag der Anmeldung: 06.06.2018
(73) Patentinhaber: Hydac Accessories GmbH, 66280 Sulzbach/Saar (DE)
(72) Erfinder: EBERHARD, Ralph, 74613 Öhringen (DE)
(74) Vertreter: Bartels und Partner, Patentanwälte
(86) Internationale Anmeldenummer: PCT/EP2016/001037
(87) Internationale Veröffentlichungsnummer: WO 2017/016626

(56) Entgegenhaltungen:
- DE-A1- 19 934 574
- US-A- 3 106 346
- US-A1- 2011 220 224

## Beschreibung

Die Erfindung betrifft eine Verteilvorrichtung für mindestens ein Fluid, mit den Merkmalen im Oberbegriff von Anspruch 1.

Bekannte Verteilvorrichtungen dieser Gattung kommen bei Fertigungseinrichtungen zum Einsatz, bei denen Bearbeitungswerkzeuge im Betrieb mit unterschiedlichen Fluiden zu versorgen sind. Insbesondere handelt es sich dabei um die Zufuhr von flüssigem Kühlmittel für Kühlung und/oder Schmierung spanabhebender Bearbeitungswerkzeuge sowie um Druckluft, die in gewählten Zeitabschnitten der Bearbeitungszone als Blasluft zuzuführen ist. Neben der Medienverteilung Flüssigkeit/Luft ist vielfach eine Verteilung des Kühlmittels auf unterschiedliche Fluidführungen erforderlich, über die das Kühlmittel für eine Innenkühlung zu inneren Kühlkanälen des betreffenden Bearbeitungswerkzeugs zuführbar ist oder das Kühlmittel für eine Außenkühlung der Bearbeitungszone von außen her zuführbar ist. Beim Stand der Technik ist als Medienverteiler ein Rohrsystem vorgesehen, das Rohrzweige als Verteileinheiten aufweist. Für eine derartige externe Verrohrung ist nicht nur ein erhöhter Bauaufwand, sondern auch ein hoher Platzbedarf erforderlich. Als weiterer Nachteil kommt hinzu, dass die verzweigte Verrohrung potentielle Leckagestellen bildet.

Die US 2011/0220224 A1 und die DE 199 34 574 A1 beschreiben jeweils eine gattungsgemäße Verteilvorrichtung für mindestens ein Fluid, das im Rahmen einer Fluidführung über mindestens zwei Verteileinheiten führbar ist, wobei mindestens zwei der Verteileinheiten einander benachbart angeordnet eine gemeinsame Schnittstelle der Fluidführung miteinander begrenzen und wobei in mindestens einer dieser Schnittstellen mindestens ein Funktionselement eingesetzt ist.

Eine weitere Verteilvorrichtung geht aus der US 3 106 346 hervor.

Im Hinblick auf diese Problematik stellt sich die Erfindung die Aufgabe, eine Verteilvorrichtung zur Verfügung zu stellen, die einfach, kostengünstig und kompakt aufgebaut werden kann.

Erfindungsgemäß ist diese Aufgabe durch eine Verteilvorrichtung gelöst, die die Merkmale des Patentanspruchs 1 in seiner Gesamtheit aufweist.

Demgemäß zeichnet sich die Erfindung gegenüber dem Stand der Technik dadurch aus, dass das jeweilige Funktionselement aus einem Rückschlagventil; einem Druckregler-, Druckminder- oder Druckbegrenzungsventil, einer Druckwaage; oder einem Sensor, wie einem Durchfluss- oder Partikelsensor, besteht.

Unter Beibehaltung eines gleichartigen Baukörpers und ohne zusätzliche Verrohrung ist die Verteilvorrichtung dadurch in gewünschter Weise anwendungsspezifisch modifizierbar, beispielsweise durch Einsetzen eines fluidführenden Distanzstücks als Verbindungsglied zwischen zwei Modulblöcke bildenden Verteileinheiten oder zwischen einem Modulblock und einem Anschlussstück oder Abschlussstück, durch Einsetzen eines Trennelements, um beispielsweise eine innere Medientrennstelle zwischen Kühlmittel und Druckluft zu bilden, um eine Stromregelung vorzusehen oder eine Stromrichtung mittels eines Rückschlagventils vorzugeben oder um eine Funktionsüberwachung mittels eines Sensors vorzusehen.

Es ist ferner vorgesehen, dass benachbart zueinander angeordnete Verteileinheiten miteinander eine gemeinsame Schnittstelle der Fluidführung miteinander begrenzen und dass in mindestens eine dieser Schnittstellen mindestens ein Funktionselement einsetzbar ist. Dadurch ist mittels der gemeinsamen Schnittstellen für sämtliche Verteileinheiten eine einteilige, gemeinsame Fluidführung ausbildbar, wobei die Eigenschaft dieser Fluidführung mittels eines in eine gewünschte Schnittstelle einsetzbaren Funktionselements an die jeweilige Verteilerfunktion anpassbar ist. Die beim Stand der Technik vorgesehene externe Verrohrung mit den jeweiligen Verteilfunktionen entsprechenden Rohrzweigen kommt dadurch in Wegfall, so dass die erfindungsgemäße Vorrichtung einfach und kompakt und leckagesicher aufbaubar ist.

Bei besonders vorteilhaften Ausführungsbeispielen begrenzen benachbarte Verteileinheiten an ihrer Schnittstelle einen gemeinsamen Aufnahmeraum, in den das jeweilige zuordenbare Funktionselement einsetzbar ist. Dabei kann die Anordnung mit besonderem Vorteil so getroffen sein, dass alle Aufnahmeräume an den Schnittstellen der Verteileinheiten gleich ausgebildet sind und dass die Außenkontur des jeweils in den zuordenbaren Aufnahmeraum einsetzbaren Funktionselements diesem Aufnahmeraum angepasst ist. Dadurch bildet die erfindungsgemäße Vorrichtung ein Baukastensystem, das es ermöglicht, die Funktionsweise der Vorrichtung bei Verwendung gleichartiger Modulblöcke, die zwischen sich gleichartige Schnittstellen bilden, an die anwendungsspezifischen oder anwenderspezifischen Anforderungen anzupassen.

Bei vorteilhaften Ausführungsbeispielen ist in die Außenkontur des jeweiligen Funktionselements mindestens ein Dichtring integriert. Dadurch übernehmen die Funktionselemente zusätzlich die Abdichtungsfunktion der Fluidführung zwischen den aufeinanderfolgenden Modulblöcken oder Anschlussstücken oder Abschlussstücken der Fluidführung.

In besonders vorteilhafter Weise weist die jeweilige ein Modul bildende Verteileinheit einen Gehäuseblock mit einem durchgehenden Fluidkanal auf, der für den Anschluss einer Ventileinheit um einen nach außen hin austretenden Querkanal erweiterbar ist. Dadurch ist für jede Verteileinheit der Mediendurchtritt steuerbar, beispielsweise für eine gewünschte wahlweise Zufuhr des Kühlmittels für Werkzeuginnenkühlung oder für Werkzeugaußenkühlung und/oder für die Druckluftzufuhr.

Für die einfache und sichere Steuerung des Betriebs der Vorrichtung können die jeweiligen Ventileinheiten mit Vorteil aus elektromagnetisch betätigbaren 2/2-Wegeventilen bestehen.

In besonders vorteilhafter Weise kann die Anordnung so getroffen sein, dass zwei einander benachbart angeordnete Verteileinheiten mit ihren Ventileinheiten für die Verteilung von flüssigem Kühlmittel dienen und eine dritte an diese angeschlossene Verteileinheit mit ihrer Ventileinheit der Zufuhr von Druckluft in die Kühlmittelkanäle der beiden anderen Ventileinheiten dient oder von diesen separiert ist, wobei zumindest zwischen den Kühlmittel-Verteileinheiten und der Druckluft-Verteileinheit ein Funktionselement eingesetzt ist, das die Druckluftzufuhr zu den anderen beiden Verteileinheiten steuert bzw. unterbindet. Für den letzteren Zweck kann ein Trennelement oder ein Rückschlagventil als Funktionselement vorgesehen sein, während für eine Steuerung des Fluidstroms als Funktionselement eine Blende oder Drossel, ein Druckminderventil oder eine andere Einrichtung zur Durchflussregelung vorgesehen sein kann.

Bei den Ventileinheiten kann die Ansteuerung in der Weise erfolgen, dass alle Ventileinheiten bestromt öffnen und unbestromt schließen oder dass mindestens eine Ventileinheit, insbesondere diejenige, die die Druckluftzufuhr steuert, unbestromt geöffnet ist, während die anderen beiden Ventileinheiten bestromt geöffnet sind.

Nachstehend ist die Erfindung anhand von in der Zeichnung dargestellten Ausführungsbeispielen im Einzelnen erläutert. Es zeigen:
- Fig. 1: eine perspektivische Schrägansicht einer Verteilvorrichtung gemäß dem Stand der Technik;
- Fig. 2: in Symboldarstellung die Fluidschaltung der dem Stand der Technik entsprechenden Verteilvorrichtung von Fig. 1;
- Fig. 3: einen Längsschnitt eines Ausführungsbeispiels der erfindungsgemäßen Verteilvorrichtung;
- Fig. 4: einen Längsschnitt einer beispielhaften Verteilvorrichtung;
- Fig. 5: eine Stirnansicht eines Funktionselements in Form eines fluidführenden Distanzstückes;
- Fig. 6 und 7: einen Längsschnitt bzw. eine perspektivische Schrägansicht des Funktionselements von Fig. 5;
- Fig. 8 und 9: eine Stirnansicht bzw. perspektivische Schrägansicht eines Funktionselements in Form eines Trennelements;
- Fig. 10 und 11: eine Stirnansicht bzw. perspektivische Schrägansicht eines Funktionselements in Form einer Blende;
- Fig. 12: eine Stirnansicht eines erfindungsgemäßen Funktionselements in Form eines Rückschlagventils;

- Fig. 13 und 14: einen Längsschnitt bzw. eine perspektivische Schrägansicht des Funktionselements von Fig. 12;
- Fig. 15: eine Stirnansicht eines erfindungsgemäßen Funktionselements in Form eines Druckbegrenzungsventils; und
- Fig. 16 und 17: einen Längsschnitt bzw. eine perspektivische Schrägansicht des Funktionselements von Fig. 15.

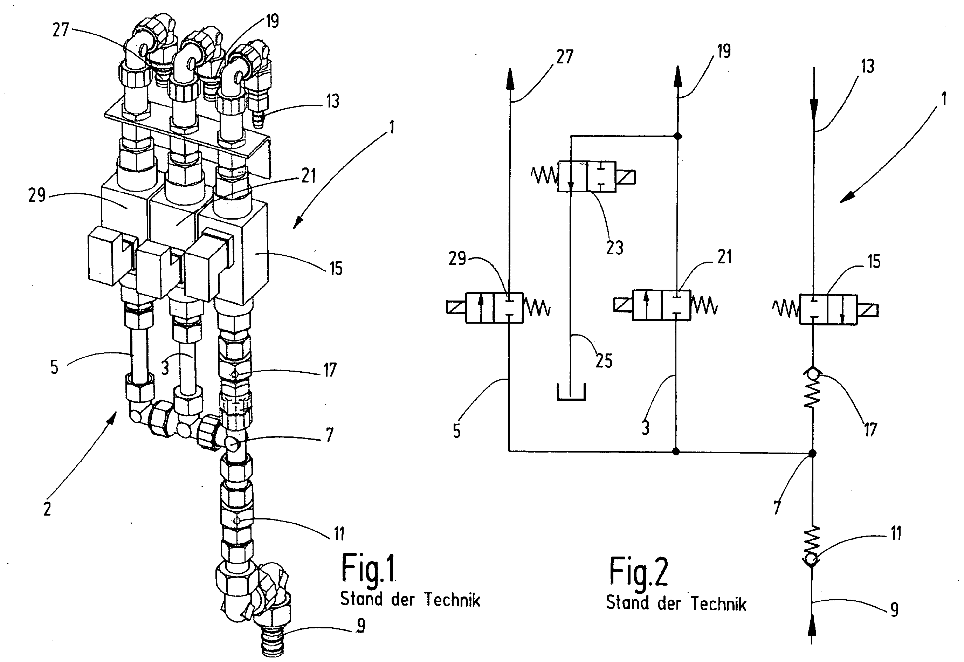

Unter Bezugnahme auf die beigefügten Zeichnungen ist die Erfindung am Beispiel von als Ganzes mit 1 bezeichneten Verteilvorrichtungen beschrieben, die dazu vorgesehen sind, um bei einer Fertigungseinrichtung, die vorzugsweise spanabhebend wirkende Bearbeitungswerkzeuge aufweist, flüssiges Kühlmittel für Kühlung und/oder Schmierung sowie Druckluft als Blasluft wahlweise zu Bearbeitungswerkzeugen zuzuführen, wobei die Zufuhr, je nachdem, ob eine Werkzeuginnenkühlung oder Werkzeugaußenkühlung gewünscht ist, ebenso wie eine Blasluftzufuhr, über unterschiedliche Fluidwege erfolgt. Im Stand der Technik ist, wie dies in den eine Verteilvorrichtung bekannter Bauweise betreffenden Fig. 1 und 2 gezeigt ist, für die Medienverteilung ein Rohrsystem 2 vorgesehen, das als Verteileinheiten 3 und 5 Rohrabschnitte aufweist, die von einem Medieneingang 7 abzweigen. Diesem ist von einem Kühlmittel-Eingangsanschluss 9 her über ein Rückschlagventil 11 das Kühlmittel zuführbar. Von einem Druckluft-Eingangsanschluss 13 her ist dem Eingang 7 über eine Ventileinheit 15 und ein Rückschlagventil 17 auch Druckluft zuführbar. Über die Verteileinheit 3 ist zu einem ersten Kühlmittelausgang 19, der für eine Werkzeuginnenkühlung vorgesehen ist, Kühlmittel oder Blasluft über eine der Verteileinheit 3 zugeordnete Ventileinheit 21 zuführbar. Für die Abfuhr einer bei der Innenkühlung eines betreffenden Werkzeugs gegebenenfalls anfallenden Leckagemenge ist ein durch ein Absperrventil 23 steuerbarer Rückführzweig 25 vorgesehen, der in Fig. 1 nicht sichtbar ist. Zu dem zweiten Kühlmittelausgang 27, der für Werkzeugaußenkühlung vorgesehen ist, ist Kühlmittel oder Blasluft von der Verteileinheit 5 her über eine weitere Ventileinheit 29 zuführbar.

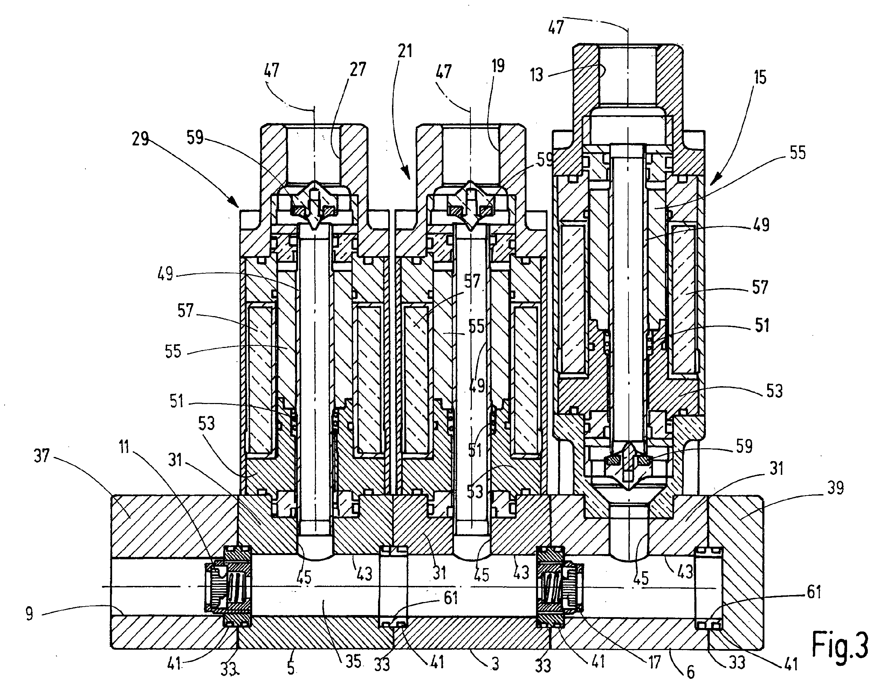

Die Verteileinheiten 3 und 5, die bei dem in Fig. 3 dargestellten Ausführungsbeispiel der erfindungsgemäßen Verteilvorrichtung für die Medienverteilung auf den Kühlmittelausgang 19 für Innenkühlung und auf den Kühlmittelausgang 27 für Außenkühlung vorgesehen sind, sind jeweils durch ein Modul in Form eines Gehäuseblocks 31 gebildet, die identisch sind. Die Verteileinheiten 3, 5 sind derart zueinander benachbart angeordnet, dass sie an einer Schnittstelle 33 aneinanderstoßen und miteinander eine gemeinsame Fluidführung 35 bilden, zu der Kühlmittel vom Kühlmittel-Eingangsanschluss 9 her zuführbar ist. Hierfür liegt an der Verteileinheit 5 am in Fig. 3 linksgelegenen Ende ein Kühlmittel-Anschlussblock 37 an einer weiteren Schnittstelle 33 an, der den Anfangsabschnitt der gemeinsamen Fluidführung 35 bildet. Der in Fig. 3 rechtsseitig gelegene Endteil der Fluidführung 35 ist als dritte Verteileinheit 6 durch ein weiteres Modul mit den anderen Modulen identisch entsprechendem Gehäuseblock 31 gebildet, der an einer weiteren Schnittstelle 33 an den Gehäuseblock 31 der Verteileinheit 3 angrenzt.

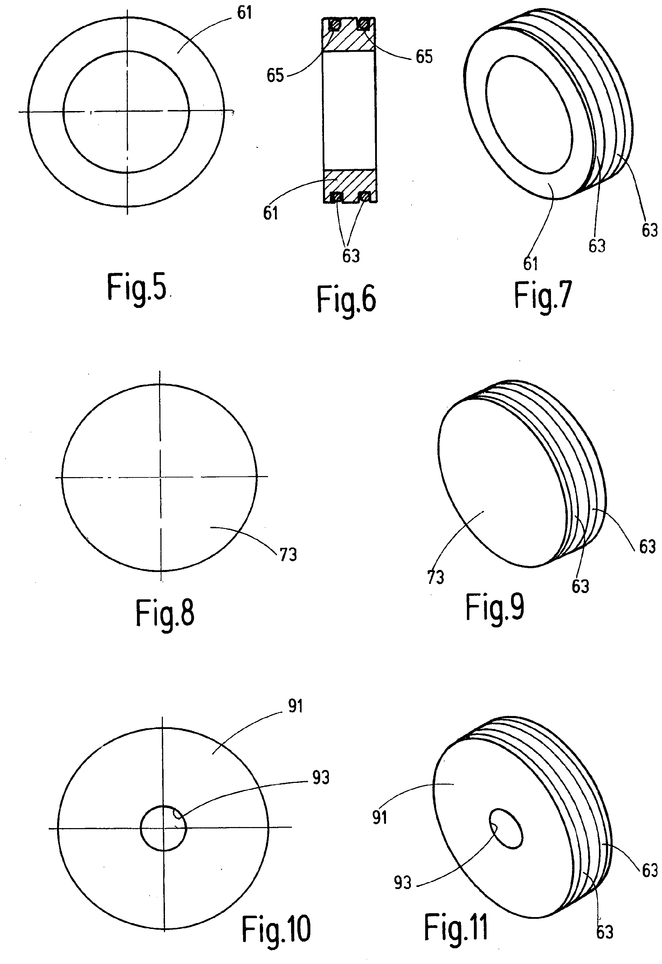

An jeder der Schnittstellen 33 zwischen den die Verteileinheiten 3, 5 und 6 bildenden Gehäuseblöcken 31 sowie an einer am rechten Ende der Fluidführung 35 gebildeten weiteren Schnittstelle 33 an einem äußeren Verschlussblock 39 ist jeweils ein Aufnahmeraum 41 gebildet, die ebenfalls in Form und Größe identisch sind. Dabei befindet sich zu beiden Seiten jeder Schnittstelle 33 jeweils je eine Hälfte einer Ringnut in Form eines Teils eines Kreiszylinders. In die Aufnahmeräume 41 ist jeweils ein Funktionselement einsetzbar, die jeweils eine Außenkontur besitzen, die im Aufnahmeraum 41 passend aufnehmbar ist. Die Fig. 5 bis17 zeigen Beispiele von in die Aufnahmeräume 41 einsetzbaren Funktionselementen.

Die Gehäuseblöcke 31 weisen jeder von ihrem durchgehenden Fluidkanal 43 ausgehend, der Teil der gemeinsamen Fluidführung 35 bildet, einen zentral gelegenen, abzweigenden Querkanal 45 auf, der jeweils eine Anschlussstelle für eine von drei nebeneinanderliegenden Ventileinheiten bildet. In Übereinstimmung mit der Fluidschaltung, wie sie in Fig. 2 für eine Verteilvorrichtung gemäß dem Stand der Technik gezeigt ist, bildet der Querkanal 45 der Verteileinheit 3 die Anschlussstelle für die den Kühlmittelausgang 19 (Innenkühlung) steuernde Ventileinheit 21. Der Querkanal 45 der anderen Verteileinheit 5 bildet die Anschlussstelle für die den Kühlmittelausgang 27(Außenkühlung) steuernde Ventileinheit 29, während der Querkanal 45 der Verteileinheit 6 die Anschlussstelle für die Ventileinheit 15 bildet, die den Eingangsanschluss 13 für Druckluft steuert. Die Ventileinheiten 15, 21 und 29 sind jeweils elektromagnetisch betätigbare 2/2-Wegeventile, die jeweils ein entlang einer Verfahrachse 47 axial verschiebbares, inneres Durchgangsrohr 49 als bewegbaren Ventilkörper aufweisen. Die Durchgangsrohre 49 sind jeweils durch eine Druckfederanordnung 51, die sich einerseits an einem Polkern 53 und andererseits am mit dem Durchgangsrohr 49 verbundenen Anker 55 abstützt, in eine Endlage vorgespannt. Die Fig. 3 zeigt einen Betriebszustand, bei dem die Spulenwicklung 57 bei jeder der drei Ventileinheiten 15, 21 und 29 bestromt ist, wobei der jeweilige Anker 55 gegen die Wirkung der Federanordnung 51 in der am Polkern 53 anliegenden Endlage ist. Bei dieser Position des Durchgangsrohres 49 sind die Ventileinheiten 21 und 29 jeweils geöffnet, weil sich deren Durchgangsrohre 49 mit ihren in Fig. 3 obenliegenden Enden in einem Abstand von einem Dichtelement 59 befinden, so dass der Fluidweg von der Fluidführung 35 her zu beiden Kühlmittelausgängen 19 und 27 offen ist. Bei dem für die Ventileinheit 15 gezeigten, bestromten Zustand, bei dem der Anker 55 ebenfalls gegen die Wirkung der Federanordnung 51 in der am Polkern 53 anliegenden Endstellung ist, befindet sich das untere Ende des Durchgangsrohres 49 in dichtender Anlage am Dichtelement 59, so dass der Druckluft-Eingangsanschluss 13 gesperrt ist.

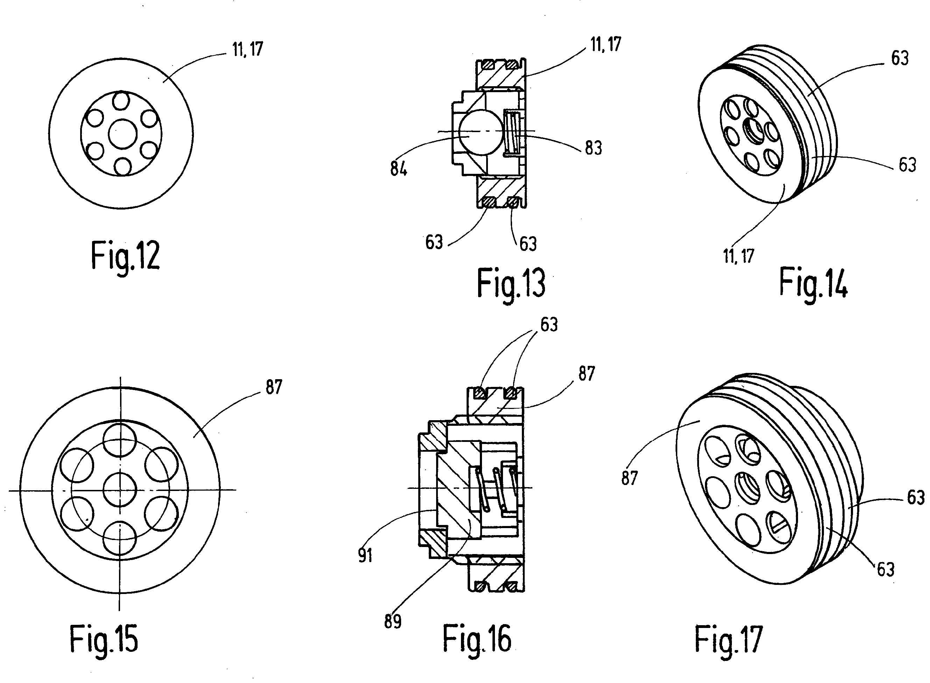

Bei dem Ausführungsbeispiel von Fig. 3 ist an der Schnittstelle 33, die sich zwischen den Verteileinheiten 3 und 5 befindet, als Funktionselement ein Distanzstück 61 eingesetzt, das in Fig. 5 bis 7 in gesonderter Darstellung gezeigt ist und den Strömungsweg der Fluidführung 35 ohne Strömungsbeeinflussung fortsetzt. Gleichzeitig bildet das Distanzstück 61 dabei eine Abdichtung der Schnittstelle 33. Hierfür weist das Distanzstück 61 zwei nebeneinanderliegende Dichtringe 63 auf, die in Ringnuten 65 an der Außenkontur des Distanzstücks 61 sitzen. An der in Fig. 3 rechts außen liegenden Schnittstelle 33 ist ebenfalls ein Distanzstück 61 vorgesehen, das an dieser Schnittstelle 33 die Abdichtung mit dem Verschlussblock 39 bildet. Die an den übrigen beiden Schnittstellen 33 als Funktionselemente eingesetzten Rückschlagventile 11 und 17, die in den Fig. 12 bis 14 gesondert dargestellt sind, weisen, wie das Distanzstück 61, ebenfalls an ihrer Außenkontur entsprechende Dichtringe 63 auf, so dass auch die Rückschlagventile 11, 17 als Funktionselemente gleichzeitig die Abdichtung an der Schnittstelle 33 bilden.

Wenn beim Betrieb des Ausführungsbeispiels von Fig. 3 die Kühlmittelzufuhr eingeschaltet ist und am Kühlmittel-Eingangsanschluss 9 Kühlmitteldruck anliegt, erfolgt die Kühlmittelzufuhr zum Kühlmittelausgang 19 für Innenkühlung oder zum Kühlmittelausgang 27 zur Außenkühlung in Abhängigkeit davon, welche der Ventileinheiten 21 und 29 bestromt ist. Bei dem in Fig. 3 gezeigten Zustand, wo beide Ventileinheiten 21 und 29 bestromt sind, wird Kühlmittel zum Werkzeuginneren und von außen her in die Bearbeitungszone des betreffenden Werkzeugs zugeführt, da das Rückschlagventil 11 vom Kühlmitteldruck geöffnet ist. Gleichzeitig ist durch den Kühlmitteldruck das Rückschlagventil 17 geschlossen, das sich an der Schnittstelle 33 zwischen der Verteileinheit 3 und dem Gehäuseblock 31 befindet, an dem die Ventileinheit 15 angeschlossen ist, das die Druckluftzufuhr steuert. Wird anstelle der Kühlmittelzufuhr die Zufuhr von Blasluft gewünscht, wird die Kühlmittelzufuhr zum Kühlmittel-Eingangsanschluss 9 unterbunden, während die Ventileinheit 15 bestromt ist und dadurch öffnet, so dass das Rückschlagventil 17 durch die Druckluft betätigt öffnet, während das Rückschlagventil 11 schließt. Je nachdem, welche der Ventileinheiten 21 oder 29 nunmehr bestromt ist, gelangt Blasluft über die Ausgänge 19 und/oder 27 zum Bearbeitungswerkzeug.

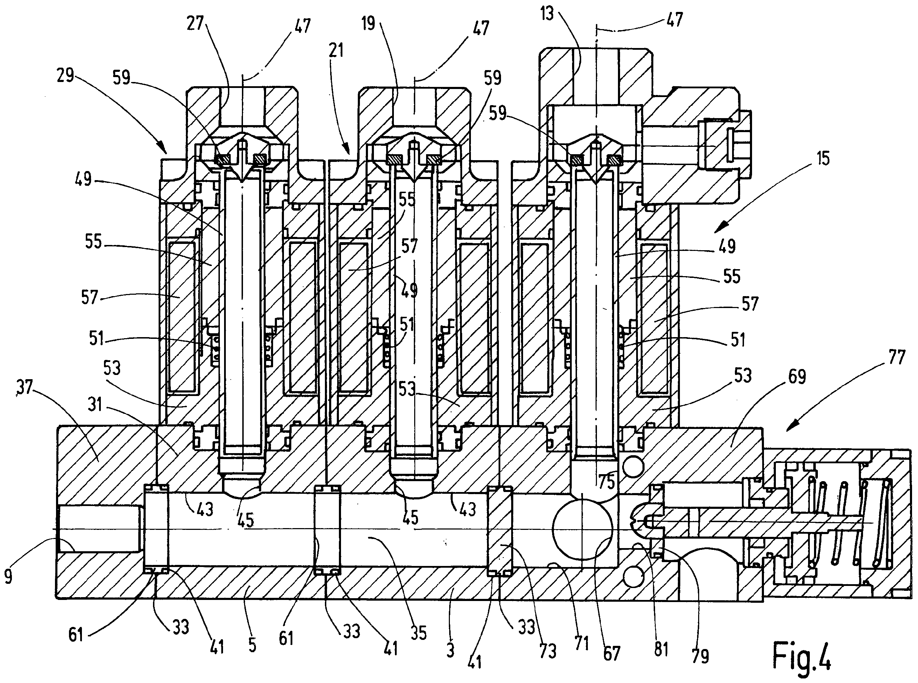

Das weitere Ausführungsbeispiel gemäß Fig. 4 unterscheidet sich demgegenüber unter anderem dadurch, dass die Blasluft zu der jeweiligen Werkzeug-Bearbeitungszone nicht über die Kühlmittelausgänge 19, 27 zugeführt wird, sondern dass ein eigener Druckluftausgang 67 vorgesehen ist. Wie bei dem ersten Ausführungsbeispiel ist jedoch mittels der Verteileinheiten 3 und 5, die wie beim ersten Ausführungsbeispiel durch Module mit identischem Gehäuseblock 31 gebildet sind, eine gemeinsame Fluidführung 35 vorgesehen, die vom Kühlmittel-Eingangsanschluss 9 ausgeht. In Entsprechung zum ersten Ausführungsbeispiel sind an den Schnittstellen 33 zwischen den Verteileinheiten 3 und 5 sowie an der Schnittstelle 33 zwischen der Verteileinheit 5 und dem Kühlmittel-Anschlussblock 37 Aufnahmeräume 41 gebildet, wie dies auch an der Schnittstelle 33 zwischen der Verteileinheit 3 und einem daran anliegenden Ventilblock 69 der Fall ist. Letzterer weist eine Bohrung 71 auf, die an der Schnittstelle 33 mit dem inneren Kanal 43 der Verteileinheit 3 fluchtet. Um die Druckluftseite von der Kühlmittelseite, d.h. von der Fluidführung 35, zu separieren, ist an dieser Schnittstelle 33 in den Aufnahmeraum 41 als Funktionselement ein Trennelement 73 eingesetzt, das in Fig. 8 und 9 gesondert dargestellt ist und die Form einer geschlossenen Kreisscheibe mit der gleichen Außenkontur wie die übrigen Funktionselemente besitzt und ebenfalls Dichtringe 63 am Außenumfang aufweist. Im Inneren der Bohrung 71 des Ventilblocks 69 ist der Druckluftausgang 67 ausgebildet. Ein von der Bohrung 71 abzweigender Querkanal 75 bildet in entsprechender Weise wie die Querkanäle 45 an den Gehäuseblöcken 31 der Verteileinheiten 3 und 5 einen Anschluss für die Ventileinheit 15, die den Druckluft-Eingangsanschluss 13 steuert. Durch die Trennung der Druckluftseite von der Kühlmittelseite mittels des Sperrelements 73 kommt beim Ausführungsbeispiel von Fig. 4 das Rückschlagventil 17 des ersten Ausführungsbeispiels in Wegfall. Bei dem Ausführungsbeispiel von Fig. 4 ist jedoch für die Druckluftseite ein Druckbegrenzungsventil 77 vorgesehen, für das der Ventilblock 69 ein Ventilgehäuse bildet. Das Druckbegrenzungsventil 77 weist einen federbelasteten Ventilkörper 79 auf, der bei der in Fig. 4 gezeigten Schließstellung einen Fortsatz 81 der Bohrung 71 abdichtet.

Durch das Vorhandensein des Trennelements 73 kommt das Rückschlagventil 11 in Wegfall, das beim Ausführungsbeispiel von Fig. 3 am Kühlmittel-Anschlussblock 37 vorgesehen ist. Als Funktionselemente sind in den Aufnahmeraum 41 der Trennstelle (Schnittstelle) 33 zwischen den Verteileinheiten 3 und 5 ein Distanzstück 61 und in den Aufnahmeraum 41 zwischen Verteileinheit 5 und Anschlussblock 37 ebenfalls ein Distanzstück 61 eingesetzt. Beim Betrieb des Ausführungsbeispiels von Fig. 4 erfolgt die Kühlmittelzufuhr, wie beim ersten Ausführungsbeispiel, durch Steuerung der Ventileinheiten 21 und 29, während eine hiervon unabhängige Blasluftzufuhr durch Betätigung der Ventileinheit 15 erfolgen kann. Bei der gezeigten Anordnung von Fig. 4 wird für die Blasluftzufuhr die Ventileinheit 15 bestromt. Für eine Kühlmittelzufuhr für Innenkühlung und für Außenkühlung sind jeweils die Ventileinheiten 21 und 29 ebenfalls zu bestromen.

Anstelle oder zusätzlich zu den in Fig. 3 und 4 eingesetzten Funktionselementen, wie Distanzstück 61 und Sperrelement 73, können Funktionselemente anderer Bauweise vorgesehen sein. Für eine Drosselung des Medien-Volumenstroms kann ein Funktionselement in Form einer Blende 91 vorgesehen sein, wie sie in Fig. 10 und 11 gesondert dargestellt ist und die Form einer Kreisscheibe mit einer Drosselbohrung 93 besitzt. Wie bei den anderen Funktionselementen sind Dichtringe 63 am Außenumfang vorgesehen. Die Fig. 12 bis 14 zeigen ein Rückschlagventil in Form eines Kugelventils mit einer durch eine Druckfeder 83 belasteten Ventilkugel 85. Die Fig. 15 bis 17 zeigen ein Druckbegrenzungsventil 87 mit einem federbelasteten Ventilkolben 89 mit einer für einen vorgegebenen Öffnungsdruck kalibrierten Kolbenfläche 91. Sämtliche Arten der vorgesehenen Funktionselemente weisen eine zu den Aufnahmeräumen 41 passende Außenkontur mit außenliegenden Dichtringen 63 auf, so dass die Funktionselemente Bestandteil des gebildeten, modularen Baukastensystems bilden.

## Patentansprüche

1. Verteilvorrichtung für mindestens ein Fluid, das im Rahmen einer Fluidführung (35) über mindestens zwei Verteileinheiten (3, 5, 6) führbar ist, wobei mindestens zwei der Verteileinheiten (3, 5, 6) einander benachbart angeordnet eine gemeinsame Schnittstelle (33) der Fluidführung (35) miteinander begrenzen und wobei in mindestens einer dieser Schnittstellen (33) mindestens ein Funktionselement (11, 61, 73, 87, 91) eingesetzt ist, **dadurch gekennzeichnet, dass** das jeweilige Funktionselement aus
- einem Rückschlagventil (11, 17);
- einem Druckregler-, Druckminder- oder Druckbegrenzungsventil (89),
- einer Druckwaage; oder
- einem Sensor, wie einem Durchfluss- oder Partikelsensor, besteht.

2. Verteilvorrichtung nach Anspruch 1, **dadurch gekennzeichnet, dass** benachbarte Verteileinheiten (3, 5, 6) an ihrer Schnittstelle (33) einen gemeinsamen Aufnahmeraum (41) begrenzen, in den das jeweilige zuordenbare Funktionselement (11, 61, 73, 87, 91) einsetzbar ist.

3. Verteilvorrichtung nach Anspruch 2, **dadurch gekennzeichnet, dass** alle Aufnahmeräume (41) an den Schnittstellen (33) der Verteileinheiten (3, 5, 6) gleich ausgebildet sind und dass die Außenkontur des jeweils in den zuordenbaren Aufnahmeraum (41) einsetzbaren Funktionselementes (11, 61, 73, 87, 91) diesem Aufnahmeraum (41) angepasst ist.

4. Verteilvorrichtung nach einem der vorstehenden Ansprüche, **dadurch gekennzeichnet, dass** in die Außenkontur des jeweiligen Funktionselementes (11, 61, 73, 89, 91) mindestens ein Dichtring (63) integriert ist.

5. Verteilvorrichtung nach einem der vorstehenden Ansprüche, **dadurch gekennzeichnet, dass** die jeweilige Verteileinheit (3, 5, 6) aus einem Gehäuseblock (31) mit einem durchgehenden Fluidkanal (43) besteht, der für den Anschluss einer Ventileinheit (15, 21, 29) um einen nach außen hin austretenden Querkanal (45) erweiterbar ist.

6. Verteilvorrichtung nach einem der vorstehenden Ansprüche, **dadurch gekennzeichnet, dass** die jeweilige Ventileinheit aus einem elektromagnetisch betätigbaren 2/2-Wegeventil (15, 21, 29) besteht.

7. Verteilvorrichtung nach einem der vorstehenden Ansprüche, **dadurch gekennzeichnet, dass** zwei einander benachbart angeordnete Verteileinheiten (3, 5) mit ihren Ventileinheiten (21, 29) für die Verteilung von flüssigem Kühlmittel dienen und eine dritte an diese angeschlossene Verteileinheit (6) mit ihrer Ventileinheit (15) der Zufuhr von Druckluft in die Kühlmittelkanäle der beiden anderen Verteileinheiten (3, 5) dient oder von diesen separiert ist und dass zumindest zwischen den Kühlmittel-Verteileinheiten (3, 5) und der Druckluft-Verteileinheit (6) ein Funktionselement (17) eingesetzt ist, das die Druckluftzufuhr zu den anderen beiden Verteileinheiten (3, 5) steuert bzw. unterbindet.

8. Verteilvorrichtung nach Anspruch 7, **dadurch gekennzeichnet, dass** alle drei Ventileinheiten (15, 21, 29) bestromt öffnen und unbestromt schließen oder dass mindestens eine Ventileinheit, insbesondere diejenige (15), die die Druckluftzufuhr steuert, unbestromt geöffnet ist, während die anderen beiden Ventileinheiten (21, 29) bestromt geöffnet sind.

## Claims

1. Distribution device for at least one fluid, which can be guided by at least two distribution units (3, 5, 6) as part of a fluid passage (35), at least two of the distribution units (3, 5, 6) arranged adjacent to one another together delimiting a common interface (33) for the fluid passage (35) and at least one functional element (11, 61, 73, 87, 91) being inserted in at least one of these interfaces (33), **characterised in that** the respective functional element consists of
- a non-return valve (11, 17);
- a pressure control, pressure-reducing or pressure-limiting valve (89),
- a pressure compensator; or
- a sensor, such as a flow or particle sensor.

2. Distribution device according to claim 1, **characterised in that** adjacent distribution units (3, 5, 6) delimit a common receiving space (41) at their interface (33), the respective assignable functional element (11, 61, 73, 87, 91) being able to be inserted in said receiving space.

3. Distribution device according to claim 2, **characterised in that** all receiving spaces (41) at the interfaces (33) to the distribution units (3, 5, 6) have the same design and **in that** the outer contour of the functional element (11, 61, 73, 87, 91) that can be inserted in the assignable receiving space (41) is adapted to this receiving space (41).

4. Distribution device according to any one of the preceding claims, **characterised in that** at least one sealing ring (63) is integrated in the outer contour of the respective functional element (11, 61, 73, 89, 91).

5. Distribution device according to any one of the preceding claims, **characterised in that** the respective distribution unit (3, 5, 6) consists of a housing block (31) with a through fluid channel (43), which can be extended by a transverse channel (45) passing to the outside to connect a valve unit (15, 21, 29).

6. Distribution device according to any one of the preceding claims, **characterised in that** the respective valve unit consists of a 2/2 throttle valve (15, 21, 29) that can be actuated by electromagnetic means.

7. Distribution device according to any one of the preceding claims, **characterised in that** two distribution units (3, 5) arranged adjacent to one another, along with their valve units (21, 29), serve to distribute liquid coolant and a third distribution unit (6) connected to said two distribution units, along with its valve unit (15), serves to supply compressed air to the coolant channels of the other two distribution units (3, 5) or is separated from said two distribution units, and **in that** a functional element (17) is inserted at least between the coolant distribution units (3, 5) and the compressed air distribution unit (6), said functional element controlling or blocking the compressed air supply to the other two distribution units (3, 5).

8. Distribution device according to claim 7, **characterised in that** all three valve units (15, 21, 29) open when energised and close when not energised or **in that** at least one valve unit, in particular the valve unit (15) that controls the compressed air supply, is opened when not energised, while the other two valve units (21, 29) are opened when energised.

## Revendications

1. Dispositif de distribution d'au moins un fluide, qui, dans le cadre d'une conduite (35) de fluide peut passer par au moins deux unités (3, 5, 6) de distribution, au moins deux des unités (3, 5, 6) de distribution délimitant entre elles, en étant disposées au voisinage l'une de l'autre, une interface (33) commune de la conduite (35) de fluide et dans au moins l'une de ces interfaces (33) est inséré au moins un élément (11, 61, 73, 87, 91) fonctionnel, **caractérisé en ce que** l'élément fonctionnel est constitué
- d'un clapet (11, 17) antiretour ;
- d'une vanne (89) de réglage de la pression, de détente ou de limitation de la pression,
- d'une balance manométrique ; ou
- d'un capteur, comme un capteur de débit ou un capteur de particules.

2. Dispositif de distribution suivant la revendication 1, **caractérisé en ce que** des unités (3, 5, 6) de distribution voisines délimitent à leur interface (33) un espace (41) de réception commun, dans lequel l'élément (11, 61, 73, 87, 91) fonctionnel pouvant être associé peut être inséré.

3. Dispositif de distribution suivant la revendication 2, **caractérisé en ce que** tous les espaces (41) de réception aux interfaces (33) des unités (3, 5, 6) de distribution sont constitués pareillement et **en ce que** le contour extérieur de l'élément (11, 61, 73, 87, 91) fonctionnel, pouvant être utilisé dans l'espace (41) de réception pouvant être associé, est adapté à cet espace (41) de réception.

4. Dispositif de distribution suivant l'une des revendications précédentes, **caractérisé en ce qu'**au moins une bague (63) de joint est intégrée au contour extérieur de l'élément (11, 61, 73, 89, 91) fonctionnel.

5. Dispositif de distribution suivant l'une des revendications précédentes, **caractérisé en ce que** l'unité (3, 5, 6) de distribution est constituée d'un bloc (31) d'enveloppe ayant un conduit (43) traversant pour du fluide, qui, pour le raccordement d'une unité (15, 21, 29) de vanne, peut être élargi d'un conduit (45) transversal sortant vers l'extérieur.

6. Dispositif de distribution suivant l'une des revendications précédentes, **caractérisé en ce que** l'unité de vanne respective est constituée d'une électrovanne (15, 21, 29) à 2/2 voies.

7. Dispositif de distribution suivant l'une des revendications précédentes, **caractérisé en ce que** deux unités (3, 5) de distribution, disposées au voisinage l'une de l'autre, servent, par leurs unités (21, 29) de vanne, à distribuer du fluide de refroidissement liquide et une troisième unité (6) de distribution raccordée à celles-ci sert, par son unité (15) de vanne, à apporter de l'air comprimé dans les conduits de fluide de refroidissement des deux autres unités (3, 5) de distribution ou est séparée de celles-ci et **en ce qu'**au moins entre les unités (3, 5) de distribution de fluide de refroidissement et l'unité (6) de distribution d'air comprimé est inséré un élément (17) fonctionnel, qui commande ou supprime l'apport d'air comprimé aux deux autres unités (3, 5) de distribution.

8. Dispositif de distribution suivant la revendication 7, **caractérisé en ce que** toutes les trois unités (15, 21, 29) de vanne s'ouvrent lorsqu'elles sont alimentées en courant et se ferment lorsqu'elles ne sont pas alimentées en courant ou **en ce qu'**au moins un unité de vanne, notamment celle qui commande l'apport d'air comprimé, est ouverte lorsqu'elle n'est pas alimentée en courant, tandis que les deux autres unités (21, 29) de vanne sont ouvertes lorsqu'elles sont alimentées en courant.
